Europäisches Patentamt

(19) European Patent Office

Office européen des brevets

(11) Publication number : **0 454 607 A2**

# (12) EUROPEAN PATENT APPLICATION

(21) Application number : 91480043.8

(22) Date of filing : 07.03.91

(51) Int. Cl.⁵ : **G06F 9/44**

(30) Priority : 24.04.90 US 513651

(43) Date of publication of application :
**30.10.91 Bulletin 91/44**

(84) Designated Contracting States :
**DE FR GB**

(71) Applicant : **International Business Machines Corporation**
**Old Orchard Road**
**Armonk, N.Y. 10504 (US)**

(72) Inventor : **Williams, Marvin L.**
**1152 Settlers Way**
**Lewisville, Texas 75067 (US)**

(74) Representative : **Tubiana, Max**
**Compagnie IBM France Département de Propriété Intellectuelle**
**F-06610 La Gaude (FR)**

(54) **Method for automated event activation of data processing procedures.**

(57)   A method is disclosed for automating data processing procedures. A selected process is specified which includes multiple data processing procedures. The selected process is then stored within a data processing system. A procedural abstract is created and utilized to control the manner and sequence in which the multiple data processing procedures shall take place. A plurality of events are listed within the procedural abstract and are monitored by services within the data processing system. Thereafter, the occurrence of each listed event may be utilized to automatically activate or terminate a specified data processing procedure. In the preferred embodiment of the present invention a listed event may comprise the occurrence of an elapse time, or the final event in a chain of events, all of which must occur prior to the activation or termination of a specified data processing procedure. In the disclosed embodiment of the present invention the procedural abstract may be utilized to record the number of occurrences of each listed event and to report each such occurrence to a specified user.

EP 0 454 607 A2

# METHOD FOR AUTOMATED EVENT ACTIVATION OF DATA PROCESSING PROCEDURES

## BACKGROUND OF THE INVENTION

### Field of the Invention

The present invention relates in general to the field of data processing systems and in particular to the field of automated data processing systems. Still more particularly, the present invention relates to an automated data processing system in which selected data processing procedures are activated or terminated in response to the occurrence of specified events.

### Description of the Prior Art

The automation of selected data processing procedures is known in the prior art. These automation techniques are exclusively limited to a single procedure and are generally initiated and controlled by a computer user. For example, a computer user may initiate a particular procedure and have that procedure proceed automatically to generate a result or other activity. Upon the termination of that procedure the computer user may be prompted to initiate a second or subsequent computer procedure.

Such known automation techniques are therefore limited to a single procedure and require substantial intervention on the part of a human computer user in order to accomplish a complex procedure. It should therefore be apparent that what is needed is an automated procedure whereby a complex process comprising multiple data processing procedures may be initiated and run automatically in response to the occurrence of selected events or in response to a process detailed within a procedural abstract associated with the complex data processing procedure.

## SUMMARY OF THE INVENTION

It is therefore one object of the present invention to provide an improved data processing system.

It is another object of the present invention to provide an improved data processing system which permits the automation of selected data processing procedures.

It is yet another object of the present invention to provide an improved data processing system which permits the automation of selected data processing procedures in response to the occurrence of specific external events.

The foregoing objects are achieved as is now described. A selected process within a data processing system is specified which includes multiple data processing procedures. The selected process is then stored within the data processing system. A procedural abstract is created and utilized to control the manner and sequence in which the multiple data processing procedures shall take place. A plurality of events are listed within the procedural abstract and monitored by various services within the data processing system. Thereafter, the occurrence of each listed event is utilized to automatically activate or terminate a specified data processing procedure. In a preferred embodiment of the present invention a listed event may comprise the occurrence of an elapsed time, or the final event in a chain of events, all of which must occur prior to the activation of a specified data processing procedure. In the disclosed embodiment of the present invention the procedural abstract may also be utilized to record the number of occurrences of each listed event and report each occurrence of that event to a specified user.

The above as well as additional objects, features, and advantages of the invention will become apparent in the following detailed description.

## BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 is a pictorial representation of a distributed data processing system which may be utilized to implement the method of the present invention;

Figure 2 discloses a simple event activated procedural abstract constructed in accordance with the method of the present invention;

Figure 3 discloses a more complex event activated procedural abstract constructed in accordance with the method of the present invention;

Figure 4 is a logic flowchart depicting the establishment of a procedural abstract, in accordance with the method of the present invention; and

Figure 5 is a logic flowchart depicting the automation of a data processing procedure in accordance with the method of the present invention.

## DETAILED DESCRIPTION OF THE INVENTION

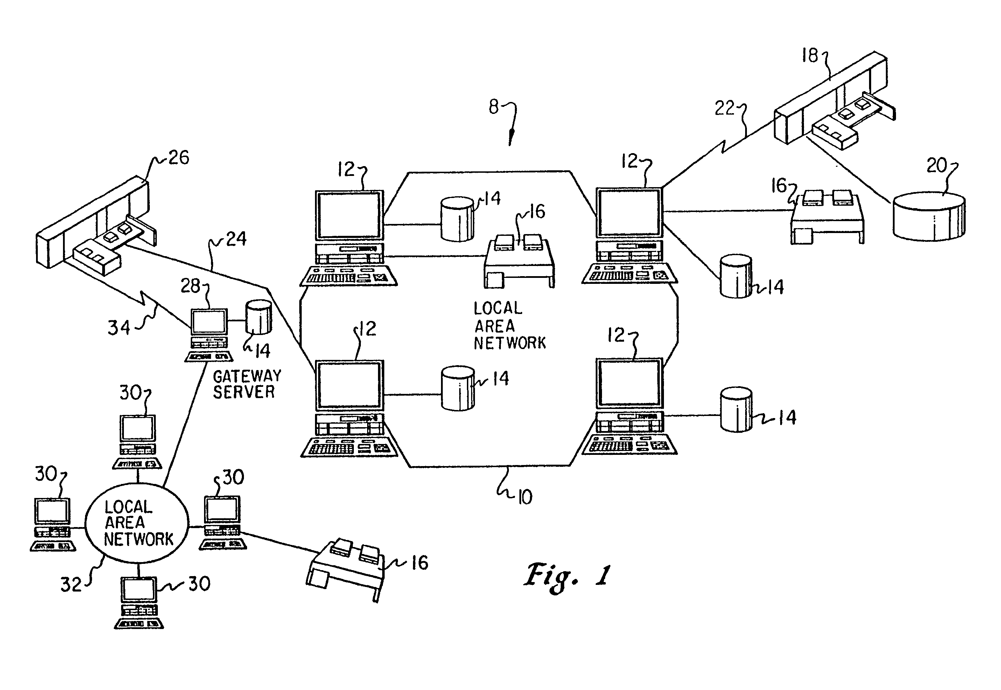

With reference now to the figures and in particular with reference to Figure 1, there is depicted a pictorial representation of a data processing system 8 which may be utilized to implement the method of the present invention. As may be seen, data processing system 8 may include a plurality of networks, such as Local Area Networks (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common is such data processing systems, each individual computer may be coupled to a storage device 14 and/or a printer/output device 16. One or more such storage devices 14 may be utilized, in accordance with the method of the present invention, to store the various data processing procedures which may be periodically accessed by a user within data processing system 8, in accordance with the method of the present invention. In a manner well known in the prior art, each such data processing procedure may be stored within a storage device 14 which is associated with a Resource Manager or Library Service, which is responsible for maintaining and updating all resource objects associated therewith.

Still referring to Figure 1, it may be seen that data processing network 8 may also include multiple mainframe computers, such as mainframe computer 18, which may be preferably coupled to Local Area Network (LAN) 10 by means of communications link 22. Mainframe computer 18 may also be coupled to a storage device 20 which may serve as remote storage for Local Area Network (LAN) 10. Similarly, Local Area Network (LAN) 10 may be coupled via communications link 24 through a subsystem control unit/communications controller 27 and communications link 34 to a gateway server 28. Gateway server 28 is preferably an individual computer or Intelligent Work Station (IWS) which serves to link Local Area Network (LAN) 32 to Local Area Network (LAN) 10.

As discussed above with respect to Local Area Network (LAN) 32 and Local Area Network (LAN) 10, a plurality of data processing procedures may be stored within storage device 20 and controlled by mainframe computer 18, as Resource Manager or Library Service for the data processing procedures thus stored. Of course, those skilled in the art will appreciate that mainframe computer 18 may be located a great geographical distance from Local Area Network (LAN) 10 and similarly Local Area Network (LAN) 10 may be located a substantial distance from Local Area Network (LAN) 32. That is, Local Area Network (LAN) 32 may be located in California while Local Area Network (LAN) 10 may be located within Texas and mainframe computer 18 may be located in New York.

In known prior art systems of this type it is common for a user in one area of a distributed data processing system 8 to specify a particular process which may comprise a plurality of data processing procedures some of which leave as is stored within another portion of distributed data processing system 8. It should therefore be apparent that it would be very helpful to have a system whereby such data processing procedures may be automated, in order to greatly enhance the efficiency of the data processing system.

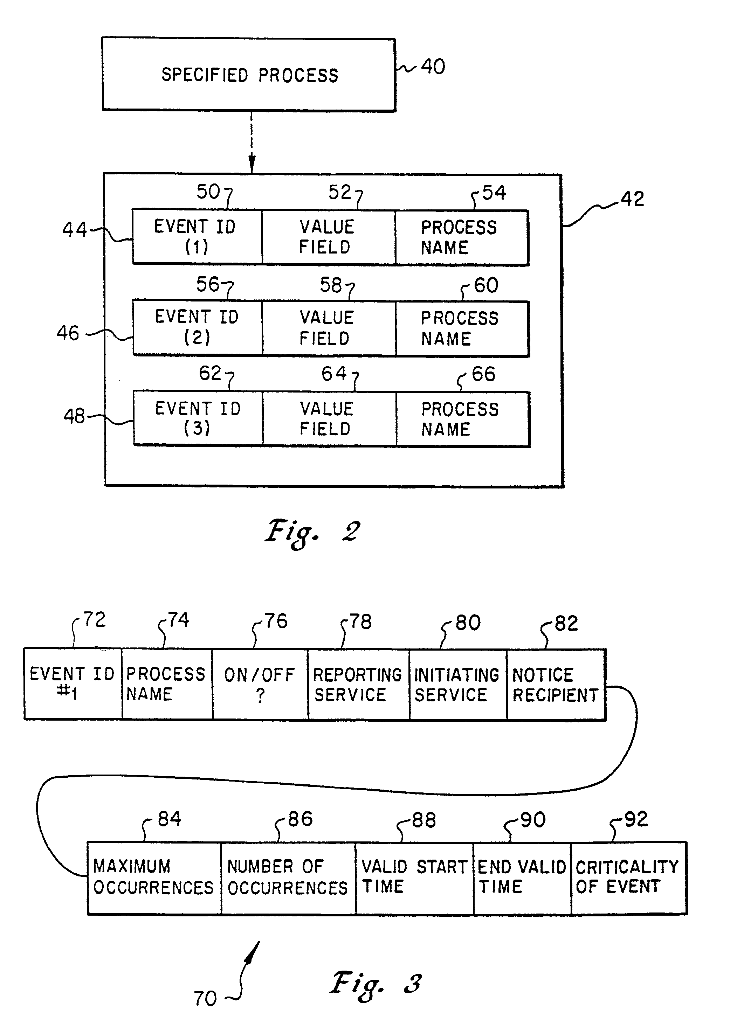

Referring now to Figure 2, there is depicted a simple event activated procedural abstract constructed in accordance with the method of the present invention. As is illustrated, a specified process 40 has been created and stored within data processing system 8 (see Figure 1). As utilized herein, specified process 40 shall comprise a plurality of data processing procedures or processes which are preferably stored at various points throughout data processing system 8. In accordance with an important feature of the present invention, a procedural abstract 42 is thereafter created and associated with specified process 40.

Procedural abstract 42 is utilized to automate the various procedures which comprise specified process 40 in a manner which will be explained in greater detail herein. As is illustrated, procedural abstract 42 includes a plurality of procedure specifications 44, 46, and 48. In this simplified version of a procedural abstract each procedural specification includes three fields. For example, field 50 of procedural specification 44 is utilized to record the identification of the event which is utilized to activate or terminate the process in question. Field 52 may be utilized to store a value indicative of the number of times that event has occurred and field 54 is utilized to store the name of the process which is to be activated or terminated in response to occurrence of the event specified within field 50.

Those skilled in the art will appreciate that events and procedures within this procedural abstract must be identified in a consistent manner in order to permit the automation of the specified process 40. This may be accomplished in any way known to those skilled in the art; however, the Document Interchange Architecture (DIA) used in many International Business Machines Corporation office products has architected a method by which many events and procedures are assigned a Unique Library Name, also referred to as a Library Assigned Document Name (LADN). In this manner, an event or procedure may be identified uniquely within a network by specifying an event within the context of a document with a Library Assigned Document Name (LADN).

As described herein, the process of defining prerequisite events and succeeding events may be utilized to define specified process 40. The utilization of a Library Assigned Document Name (LADN) to reference specified process 40 will, as those skilled in the art may appreciate, allow a group of users to utilize the same specified process 40 to describe the same series of events or procedures. These users must have essentially agreed upon the same definitions of what they consider triggering events, as described in the procedure. The event activated procedural specification described herein may identify an event within a procedure by assigning an integer value for the particular event, described herein as an "Event Identifier" or "Event ID" along with other supplementary information which will be described in detail herein. Thus, as illustrated, procedural specification 42 includes three procedural specifications each of which includes an event identification, the number of times that event has occurred and the process or procedure to be initiated or terminated upon the occurrence of that event.

With reference now to Figure 3 there is depicted a more complex event activated procedural specification constructed in accordance with the method of the present invention. As is illustrated in Figure 3, procedural specification 70 begins with an enumeration of the event ID for the event which will be utilized to initiate or terminate the specific process. Next, field 74 identifies the name of the process to be initiated or terminated, utilizing the aforementioned Library Assigned Document Name (LADN). Next, field 76 includes an indication of whether the named process is to be initiated or terminated in response to the listed event.

Field 78 may be utilized to list a reporting service, in the event the user assigning this event to a specified process desires a notification to be transmitted upon the occurrence of the event. Field 80 is then utilized to store an indication of the initiating service, that is, the service responsible for activating or terminating the named process. Field 82 is preferably utilized to store the address of a recipient for the notice required by the user establishing this procedural specification. Field 84 may be utilized to permit the user to specify the maximum number of occurrences of this particular event which may be utilized to initiate or terminate the named process.

Procedural specification 70 may also include a record within field 86 which may be utilized to store the number of occurrences of the specified event. Further, fields 88 and 90 may be utilized to indicate valid start times and end times during which the event will be considered effective to initiate or terminate the named process. Those skilled in the art will appreciate that the automation of certain specified processes may require a response to a particular event, but only on the condition that the specified event occurs within a particular time frame.

Finally, field 92 may be utilized to indicate whether or not the event specified within field 72 is a critical event. That is, an event which must occur for a procedure to execute properly. Those skilled in this art will appreciate that the event activated procedural abstract described herein may allow a data and time to be associated with a critical event which may be utilized to specify by what time the critical event must be completed for the procedure to be completed and executed properly.

Further, a critical event may depend upon another critical event to create what is typically known in the data processing art as a "critical path" within the specified process. These critical events are events which must all take place in sequence and within a specified time for the procedure to be successfully completed. Of course, it should also be apparent that the event specified within field 72 may simply be the elapsing of a specified amount of time, or the passing of a particular day and time.

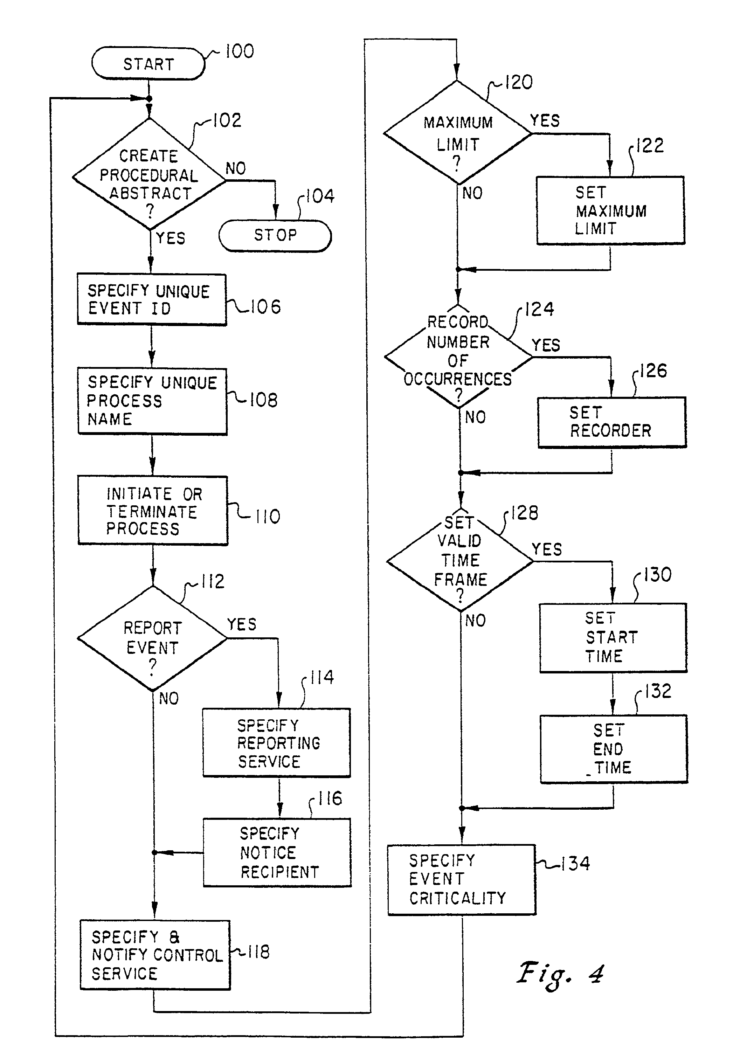

Referring now to Figure 4 there is depicted a logic flowchart illustrating the establishment of a procedural abstract, in accordance with the method of the present invention. As is illustrated, the process begins at block 100 and thereafter passes to block 102 wherein a determination is made as to whether or not the user desires to create a procedural abstract for a specified process. If not, the process simply terminates at block 104. In the event the user indicates his or her desire to create a procedural abstract, block 106 depicts the specifying by the user of an event ID for utilization in the procedural specification. As discussed above, the event ID may simply constitute the elapsing of a specified amount of time or may constitute the occurrence of an explicit event within a different process.

Next, block 108 illustrates the specification of a process name which is to be activated or terminated in response to the specified event. As described above, this is accomplished utilizing a Library Assigned Document Name (LADN) or in any other manner consistent with system requirements. Block 110 next depicts an indication of whether or not the process is to be initiated or terminated in response to the specified event.

Thereafter, block 112 illustrates a determination of whether or not the occurrence of the specified event is to be reported and if so, block 114 depicts the specifying of the service which will generate the report after the occurrence of the specified event. Block 116 permits the user to specify a notice recipient for such report and the process then returns to block 118.

Block 118 illustrates the specifying and notifying of a control service for the process in question. It should be apparent that an event activated procedural abstract, such as that described herein, must have the ability to notify other processes that they have been assigned an event identifier by a particular user. It then becomes the responsibility of the process so notified to transmit to the event activated procedural abstract an indication that the completion of a process which results in an event specified within the procedural abstract has occurred. Of course, security restrictions or other matters may prohibit one application or process from generating an event notification to the event activated procedural abstract. In such cases the application or process must notify the event activated procedural abstract that such an assignment is not possible. At this time the user will then be notified that the procedural specification may not utilize the event thus assigned.

Next, block 120 is then utilized to depict a determination of whether or not the user establishing the procedural abstract desires to set a maximum limit on the number of occurrences of the specified event which may be utilized to initiate or terminate the named process. If so, block 122 depicts the setting of the maximum limit and the process returns to block 124.

Block 124 illustrates a determination of whether or not the procedural abstract is to include a record of the number of occurrences of the specified event and if so, block 126 illustrates the setting of the recorder function, in a manner well known in the art.

Next, block 128 illustrates a determination of whether or not the procedural abstract is to include a valid time frame. If the user establishing the procedural abstract desires to set a particular time frame during which the occurrence of the specified event will be effective, then blocks 130 and 132 are utilized to depict the setting of a start time and end time for that purpose. Finally, block 134 illustrates the specifying of event criticality. As discussed above, event criticality may be utilized to define a critical path for a procedure by coupling this particular event with additional events or, may be utilized to indicate the critical nature of this particular event in a specified process wherein not all events are required for successful completion.

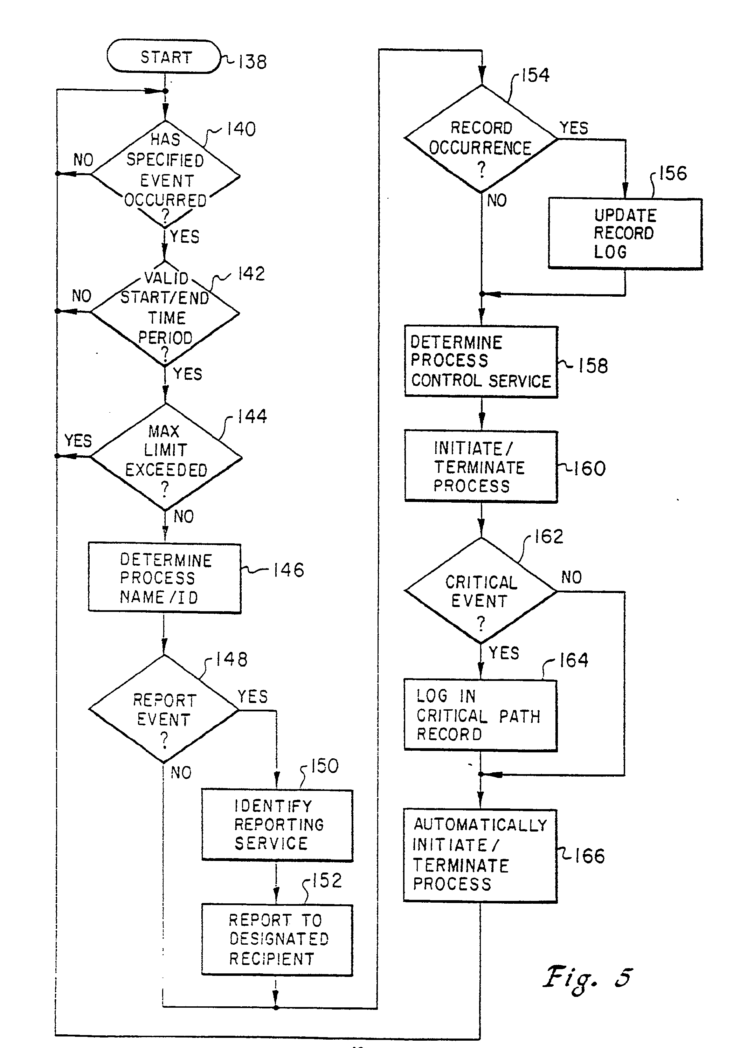

Finally, with reference to Figure 5 there is depicted a logic flowchart illustrating the automation of a specified process in accordance with the method of the present invention. As is illustrated, the process begins at block 138 and then proceeds to block 140 wherein a determination is made as to whether or not a specified event has occurred. If not, the process merely iterates until such time as a specified event occurs. In the event a specified event has occurred, block 142 is utilized to depict a determination of whether or not the event has occurred within a valid start/end time period. Of course, those skilled in the art will appreciate that if no start/end time period has been set any occurrence of an event will be a valid occurrence. If the event has not occurred within a valid start/end time period the process again returns to block 140 and proceeds in an iterative manner.

If it has been determined that the specified event has occurred within a valid start/end time period, then block 144 is utilized to determine whether or not the maximum limit on the number of occurrences of this particular specified event has been exceeded. If so, the process again returns to block 140 and continues in an iterative manner.

In the event the maximum number of occurrences of this specified event has not been exceeded, then block 146 illustrates a determination of the process name which is to be initiated or terminated in response to the occurrence of the specified event. Next, block 148 illustrates a determination of whether or not the occurrence of this event is to be reported and if so, block 150 illustrates the identification of the reporting service which will be utilized to generate the report. Block 152 depicts the reporting of the occurrence of the specified event to a designated recipient and the process passes to block 154. In the event the user establishing the procedural abstract does not desire a reporting of this event the process also passes directly from block 148 to block 154.

Block 154 is utilized to determine whether or not the specified procedural abstract requires a recording of the number of occurrences of this specified event and if so, block 156 illustrates an updating of the record log contained therein. After updating the record log, or in the event no record of occurrence is desired, the process passes to block 158 wherein the procedural abstract is utilized to determine the control service for the process specified within this procedural specification. Next, block 160 illustrates a determination of whether or not the process is to be initiated or terminated in response to the occurrence of the specified event.

Next, block 162 is utilized to determine whether or not the event in question is a critical event and if so, block 164 depicts the logging of the required information in the critical path record. Thereafter, or in these cases in which the event in question is not a critical event, the process passes to block 166 wherein the process in question is automatically initiated or terminated. Thereafter, the process returns to block 140 and once again awaits a notification that a specified event has occurred.

Upon reference to the foregoing those skilled in the art will appreciate that the Applicant in the present case has provided a unique method in which a complex process comprised of a plurality of data processing procedures may be fully and efficiently automated such that the process may occur with a minimum amount of user interface. This is accomplished by specifying a plurality of events, the occurrence of each of which may be utilized to automatically initiate or terminate a data processing procedure. Of course, those skilled in the art will appreciate that various status messages or the like may be included within the aforegoing description without departing from the spirit or intent hereof.

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments that fall within the true scope of the invention.

## Claims

1. A method in the data processing system of automating a selected process, said method comprising the steps of:

   specifying a selected process comprising a plurality of procedures and storing said selected process within said data processing system;

   specifying within a procedural abstract the manner and sequence in which said plurality of procedures shall take place; and

   automatically initiating or terminating said plurality of procedures in accordance with said procedural abstract.

2. The method in a data processing system of automating a selected process according to Claim 1 further including the step of storing said procedural abstract within said data processing system.

3. The method in a data processing system of automating a selected process according to Claim 1 wherein said step specifying within a procedural abstract the manner and sequence in which said plurality of procedures shall take place comprises the step of specifying within said procedural abstract at least one event the occurrence of which shall activate or terminate a selected one of said plurality of procedures.

4. The method in a data processing system of automating a selected process according to Claim 3 wherein said step of specifying within said procedural abstract at least one event the occurrence of which shall activate or terminate a selected one of said plurality of procedures comprises a step of specifying within said procedural abstract an elapsed time, the occurrence of which shall activate or terminate a selected one of said plurality of procedures.

5. The method in a data processing system of automating a selected process according to Claim 3 wherein said step of specifying within said procedural abstract at least one event the occurrence of which shall activate or terminate a selected one of said plurality of procedures comprises the step of specifying within said procedural abstract a plurality events, at least one of which must occur prior to the occurrence of said event which shall activate or terminate a selected one of said plurality of procedures.

6. The method in a data processing system of automating a selected process according to Claim 2 further including the step of storing a reference to said procedural abstract within said selected process.

7. The method in a data processing system of automating a selected process according to Claim 3 further including the step of recording the number of times said at least one event has occured.

8. The method in a data processing system of automating a selected process according to Claim 3 further including the step of transmitting a notification to a selected user upon the occurrence of said at least one event.

9. The method in a data processing system of automating a selected process according to Claim 3 further including the step of setting a maximum number of times said at least one event may occur.

Fig. 1

SPECIFIED PROCESS ~40

| EVENT ID (1) | VALUE FIELD | PROCESS NAME |
|---|---|---|
| 50 | 52 | 54 |

44 — 42

| EVENT ID (2) | VALUE FIELD | PROCESS NAME |
|---|---|---|
| 56 | 58 | 60 |

46

| EVENT ID (3) | VALUE FIELD | PROCESS NAME |
|---|---|---|
| 62 | 64 | 66 |

48

*Fig. 2*

| 72 | 74 | 76 | 78 | 80 | 82 |
|---|---|---|---|---|---|
| EVENT ID #1 | PROCESS NAME | ON/OFF ? | REPORTING SERVICE | INITIATING SERVICE | NOTICE RECIPIENT |

| 84 | 86 | 88 | 90 | 92 |
|---|---|---|---|---|
| MAXIMUM OCCURRENCES | NUMBER OF OCCURRENCES | VALID START TIME | END VALID TIME | CRITICALITY OF EVENT |

70

*Fig. 3*

*Fig. 4*

*Fig. 5*

10